# EUROPEAN PATENT APPLICATION

(11) **EP 2 608 347 A2**
(43) Date of publication of application: **26.06.2013**
(21) Application number: 12188876.2
(22) Date of filing: 17.10.2012
(51) Int. Cl.: H02J 1/14, H02J 7/00

(54) **Electric energy storage system and method of maintaining the same**

(30) Priority: 19.12.2011 JP 2011276672
(71) Applicant: Kabushiki Kaisha Toshiba, Minato-ku, Tokyo 105-8001 (JP)
(72) Inventor: Endo, Tamotsu, TOKYO Tokyo 105-8001 (JP); Fujiwara, Jun, TOKYO Tokyo 105-8001 (JP)
(74) Representative: Fritsche, Daniel

(57) **Abstract**

According to an electric energy storage system and a method of maintaining the same of the present embodiment, a charge and discharge control unit 8 for a replacement module is provided in a DC/DC converter 3 for charge and discharge control, and the charge and discharge control unit 8 for a replacement module obtains information relating to charge and discharge states of respective battery modules 5a - 5c. A maintenance connector 10 for connecting a replacement battery module 5d is provided in the electric energy storage system 1, and the replacement battery module 5d is connected to the maintenance connector 10. The charge and discharge control unit 8 for a replacement module controls the DC/DC converter 3 for charge and discharge control, based on the information relating to the charge and discharge states obtained from the respective battery modules 5a - 5c, to thereby charge and discharge the replacement battery module 5d, so as to balance the charge and discharge state of the replacement battery module 5d with the charge and discharge states of the respective battery modules in the battery unit 2.

## Description

### [CROSS-REFERENCE TO RELATED APPLICATION]

This application is based upon and claims the benefit of priority from the prior Japanese Patent Application No. 2011-276672, filed on December 19, 2011, the entire contents of which are incorporated herein by reference.

### [FIELD]

Embodiments of the present invention relate to an electric energy storage system having a plurality of battery modules and a method of maintaining the same.

### [BACKGROUND]

In large-scale solar power generation equipments, for example, electric energy storage systems using a lot of battery cells in order to suppress the output power variation thereof are used. That is, in the electric energy storage system of this kind, a plurality of battery cells are connected in series and/or in parallel to thereby compose a battery module, and a plurality of the battery modules are further connected to thereby compose a battery unit.

In the battery unit, it is required that the capacities and voltages and so on of all the battery modules are balanced. In case that the battery modules are not balanced, they can not sufficiently exercise the battery performances, and in addition, they are at risk for fire caused by the overcharge or overdischage and so on. For the reason, generally, in a battery module, a cell monitoring unit called a CMU (Cell Monitoring Unit) is provided for the purpose of monitoring a charge and discharge current and a voltage of each of the battery cells and controlling the charge and discharge operation thereof. In addition, a battery management unit called a BMU (Battery Management Unit) is provided in the battery unit in order to monitor and control each of the battery modules.

In the electric energy storage system like this, in case that even one battery module in the battery unit has broken down, basically, the whole battery unit should be replaced. However, the replacement of the whole battery unit results in a high cost, and thereby it will impose a heavy burden on a user.

On the other hand, when it is tried to replace the battery module alone for reducing the replacement cost, the following problem will occur. That is, in the state in which the battery modules in the battery unit are balanced with the capacity of 80 % and the voltage of 26 V, if a replacement battery module at the time of shipment of new one has the capacity of 50 % and the voltage of 20 V, it is necessary to conform the capacity and the voltage of the replacement battery module to those of the battery modules during use.

However, since balance adjustment operation between the battery modules after replacement is difficult and requires a long time, the decrease in system availability and the increase in maintenance cost occur.

### [BRIEF DESCRIPTION OF THE DRAWINGS]

Fig. 1 is a wiring diagram showing an outline of a first embodiment; and
Fig. 2 is a wiring diagram showing an outline of a second embodiment.

### [DETAILED DESCRIPTION]

An electric energy storage system and a method of maintaining the same of the present embodiments is characterized by including the following configuration.
(1) In an electric energy storage system, a battery unit and a DC/DC converter for charge and discharge control are provided.
(2) In the battery unit, a plurality of battery modules, and a battery management unit to manage the charge and discharge of these battery modules are provided.
(3) In each of the battery modules, a secondary cell line composed by connecting a plurality of battery cells, and a cell monitoring unit to monitor the states of the respective battery cells and to control the charge and discharge thereof are provided.
(4) In the electric energy storage system, a maintenance connector for connecting a replacement battery module, and a charge and discharge control unit for a replacement module are provided.
(5) In the electric energy storage system, the respective battery modules, the DC/DC converter for charge and discharge control, and the maintenance connector are connected by a power line.
(6) In the electric energy storage system, the cell monitoring units of the respective battery modules in the battery unit, the battery management unit, a cell monitoring unit of the replacement battery module connected to a maintenance connector, and the charge and discharge control unit for a replacement module are connected by a communication line, and the charge and discharge control unit for a replacement module obtains information relating to the charge and discharge states of the respective battery modules.
(7) The charge and discharge control unit for a replacement module controls the DC/DC converter for charge and discharge control, based on the information relating to the charge and discharge states obtained from the respective battery modules, to thereby charge and discharge the replacement battery module connected to the maintenance connector, so as to balance the charge and discharge state of the replacement battery module with the charge and discharge states of the battery modules in the battery unit.

A method of maintaining the electric energy storage system described above using the maintenance connector and the charge and discharge control unit for a replacement module is also an embodiment of the present invention.
Hereinafter, embodiments of the present invention will be described with reference to the drawings.

### 1. First embodiment

### (1) Configuration of the embodiment

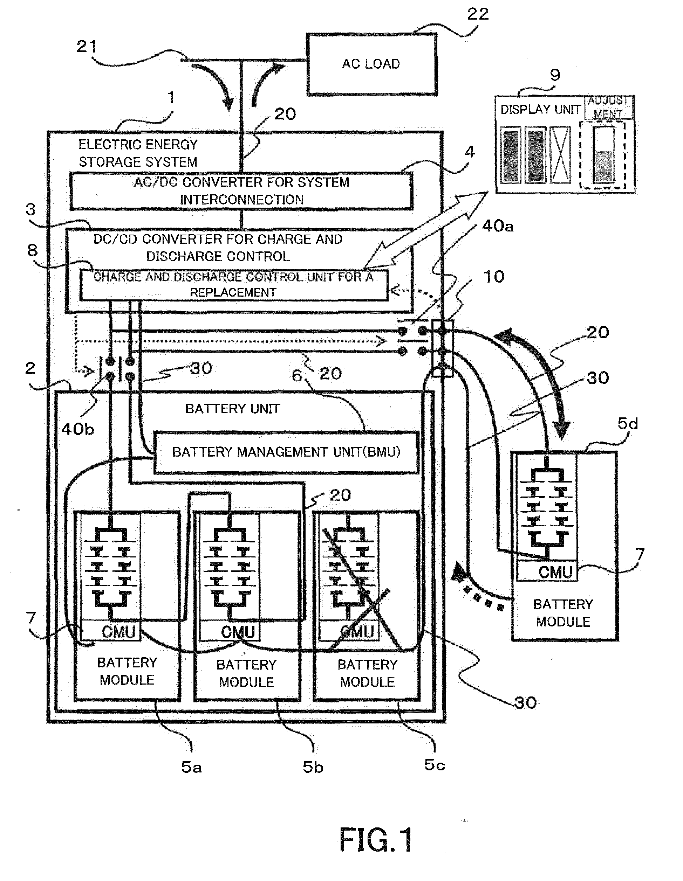

As shown in Fig. 1, an electric energy storage system 1 according to the present embodiment is provided with a battery unit 2, a DC/DC converter 3 for charge and discharge control to perform charge and discharge control for the battery unit 2, and an AC/DC converter 4 for system interconnection. In addition, the battery unit 2, the DC/DC converter 3 for charge and discharge control and the AC/DC converter 4 for system interconnection are connected by a power line 20. In addition, the AC/DC converter 4 for system interconnection is connected to a distribution system 21 and an AC load 22 by the power line 20.

The battery unit 2 has a plurality of battery modules 5a - 5c, and a battery management unit (BMU) 6 to manage these battery modules 5a - 5c. In the present embodiment, the number of the battery modules has been made 3, but the number of the battery modules is not limited to this.

Each of the battery modules 5a - 5c has a secondary cell line which is composed by connecting a plurality of battery cells and a cell monitoring unit (CMU) 7. The cell monitoring unit 7 has a function to monitor a voltage and temperature of each of the battery cells composing the secondary cell line, to transmit the data to the battery management unit 6, and to equalize the cell voltages of the respective battery cells.

The battery management unit 6 and the respective cell monitoring units 7 of the battery modules 5a - 5c are connected by a communication line 30, and the information of the charge and discharge state of each of the battery modules 5a - 5c, such as the temperature, output current, voltage and capacity thereof is inputted to the battery management unit 6 through the communication line 30. In addition, the battery management unit 6 is connected to the DC/DC converter 3 for charge and discharge control through the communication line 30, and has a function to transmit the information of the charge and discharge state from each of the battery modules 5a - 5c to the DC/DC converter 3 for charge and discharge control and to perform the charge and discharge control for each of the battery modules 5a - 5c based on a charge and discharge command from the DC/DC converter 3 for charge and discharge control.

The DC/DC converter 3 for charge and discharge control is provided with a charge and discharge control unit 8 for a replacement module. The information of the charge and discharge state of each of the battery modules 5a - 5c is inputted to the charge and discharge control unit 8 for a replacement module from the battery management unit 6 through the communication line 30. A display unit 9 is provided in the charge and discharge control unit 8 for a replacement module so as to display the charge and discharge state (the capacity and voltage, for example) of each of the battery modules 5a - 5c in graph form and so on as shown in Fig. 1.

A maintenance connector 10 for connecting a replacement battery module 5d is provided in the electric energy storage system 1. The power line 20 for charge and discharge extending from the DC/DC converter 3 for charge and discharge control, and the communication line 30 extending from the charge and discharge control unit 8 for a replacement module are connected to the maintenance connector 10.

Changeover switches 40b, 40a are provided in the power line 20 connecting the DC/DC converter 3 for charge and discharge control and the battery unit 2, and the power line 20 connecting the DC/DC converter 3 for charge and discharge control and the maintenance connector 10, respectively. These changeover switches 40a, 40b operate as follows. When it is detected that the replacement battery module 5d is connected to the maintenance connector 10, the changeover switch 40a at the maintenance connector 10 side is turned ON, and the changeover switch 40b at the battery unit 2 side is turned OFF.

### (2) Operation of the embodiment

In the present embodiment, at the time of the operation of the electric energy storage system 1, the DC/DC converter 3 for charge and discharge control outputs charge and discharge commands for the respective battery modules 5a - 5c to the battery management unit 6 so that a DC voltage at the side of the AC/DC converter 4 for system interconnection falls within a prescribed range.

In addition, the cell management unit 7 of each of the battery modules 5a - 5c receives, from the battery management unit 6, the information relating to the charge and discharge state including the SOC (State of Charge) and the life duration of each of the cells composing the secondary cell line, and controls the charge and discharge of each of the secondary cells based on the received data. As a result of this, in the state where the respective battery modules 5a - 5c are normal, the capacities and the voltages of the respective battery modules 5a - 5c are almost the same values (the capacity: 80 %, the voltage: 26 V, in the example of Fig. 1).

In this state, for example, it is assumed that the battery module 5c shown in Fig. 1 is required to be replaced. In addition, the failure, degradation and so on of the battery module can be determined from the data of the voltage, the capacity and so on of each of the battery modules 5a - 5C which are collected by the battery management unit 6.

The replacement battery module 5d is charged, in its new state at the time of shipment, in the state of the capacity of 50 % and the voltage of 20 V. In this state, these values thereof are not balanced with the capacity of 80 % and the voltage of 26 V of each of the normal battery modules 5a, 5b connected to the battery unit 2. Consequently, the replacement battery module 5d is connected to the maintenance connector 10 provided in the electric energy storage system 1.

Then, when this connection is detected, the changeover switch 40a at the maintenance connector 10 side becomes ON and the changeover switch 40b at the battery unit 2 side becomes OFF. As a result, the battery modules 5a - 5c at the battery unit 2 side are electrically disconnected from the DC/DC converter 3 for charge and discharge control, to cause the DC/DC converter 3 for charge and discharge control to stop performing the charge and discharge, and thereby the defective battery module 5c can be removed from the battery unit 2.

Even in the state in which the defective battery module 5c is removed, since the communication line 30 between the battery unit 2 and the DC/DC converter 3 for charge and discharge control is in the connected state, the charge and discharge control unit 8 for a replacement module obtains the states of the battery modules 5a, 5b in the battery unit 2 through the communication line 30. At the same time, the charge and discharge control unit 8 for a replacement module obtains the information such as the capacity and voltage and so on of the replacement battery module 5d from the cell monitoring unit 7 inside the replacement battery module 5d through the communication line 30 connected to the maintenance connector 10.

The charge and discharge control unit 8 for a replacement module performs the charge and discharge of the replacement battery module 5d, based on the information of each of the battery modules obtained like this, so that the normal battery modules 5a, 5b are balanced with the replacement battery module 5d. Specifically, the charge and discharge control unit 8 for a replacement module outputs a charge and discharge command to the DC/DC converter 3 for charge and discharge control, and thereby the DC/DC converter 3 for charge and discharge control charges the replacement battery module 5d connected to the maintenance connector 10, using the charge and discharge function for the battery modules 5a - 5c inside the battery unit 2 which is provided as the original function of the electric energy storage system 1.

The information relating to the charged state (the capacity and voltage) of the replacement battery module 5d caused by the DC/DC converter 3 for charge and discharge control is constantly transmitted to the charge and discharge control unit 8 for a replacement module through the communication line 30. As a result, the charge and discharge control unit 8 for a replacement module can detect that the replacement battery module 5d has come into the balanced state with the normal battery modules 5a, 5b in the battery unit 2. After they are in the balanced state, the replacement battery module 5d is removed from the maintenance connector 10 and is attached to the inside of the battery unit 2.

### (3) (Effect of the embodiment)

The present embodiment has the following effects.
(a) It is possible to charge and discharge the replacement battery module 5d using the DC/DC converter 3 for charge and discharge control which the electric energy storage system 1 is originally provided with. For the reason, it becomes unnecessary that the battery module is charged and discharged using a portable adjustment equipment, or a discharge circuit is provided in the battery unit.

(b) The charge and discharge function of the DC/DC converter 3 for charge and discharge control provided in the electric energy storage system 1 usually targets a large number of battery modules, and has an extremely excellent ability, compared with a charge and discharge device provided in a portable adjustment equipment or a discharge circuit housed in a battery module. For the reason, a time required for the charge and discharge for balancing can be shortened.

(c) Since the connection of the replacement battery module 5d with the maintenance connector 10 is detected, and thereby the changeover switch 40a at the maintenance connector 10 side 10 is turned ON, and the changeover switch 40b at the battery unit 2 side is turned ON, the inadvertent charge and discharge from the battery unit 2 is not performed at the time of connecting the replacement battery module 5d, and thereby safety can be assured.

### 2. Second embodiment

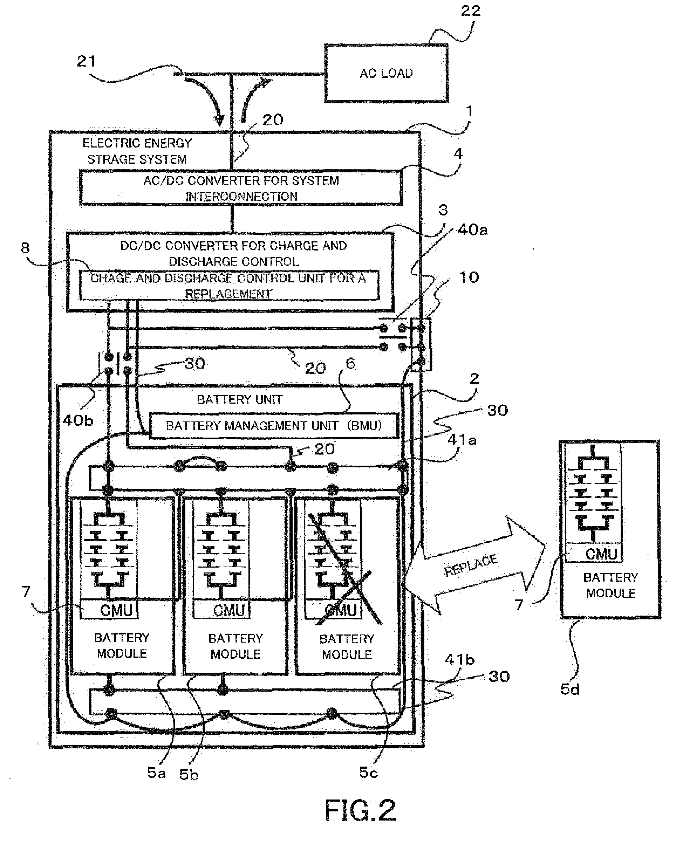

Fig. 2 shows a second embodiment of the present invention. As shown in Fig. 2, the second embodiment is provided with two terminal blocks 41a, 41b which are respectively for a main circuit and a communication circuit inside the battery unit 2.

The power line 20 of each of the battery modules 5a - 5c is connected to the battery unit 2 by way of the terminal block 41a for the main circuit. The communication line 30 of each of the battery modules 5a - 5c is connected to the battery unit 2 by way of the terminal block 41b for the communication circuit.

In the second embodiment, the power line 20 and the transmission line 30 of each of the battery modules 5a - 5c can be connected to the battery unit 2 using the terminal blocks 41a, 41b, respectively. As a result, at the time of replacement of the battery module, the operation such as soldering and wire connection is made unnecessary. In addition, each of the terminal blocks 41a, 41b may be a terminal block on which a plurality of the battery modules are connected as shown in the drawing, or small-scale terminal blocks each of which connects a single battery module may be prepared by the number of the battery modules.

### 3. Other embodiment

The present invention is not limited to the above-described embodiments, but includes other embodiments as in the following.

(1) The AC/DC converter 4 for system interconnection is not provided inside the electric energy storage system 1, but a plurality of the electric energy storage systems 1 each having the DC/DC converter 3 for charge and discharge control are connected in parallel, and the electric energy storage systems 1 and the distribution system 21 are connected through one or a plurality of the AC/DC converters 4 for system interconnection.
   In the electric energy storage system 1, a case having a converter with any of the following configurations is included: the configuration including the AC/DC converter 4 for system interconnection and the DC/DC converter 3 for charge and discharge control as shown in Fig. 1, Fig. 2, the configuration including only the DC/DC converter 3 for charge and discharge control as described above, and a configuration including only the AC/DC converter 4 for system interconnection.

(2) The charge and discharge for the electric energy storage system 1 is not connected to the distribution system, but is directly connected to a generator and a load. In that case, as the generator, a solar power generation equipment, a wind power generation equipment, or a generator which is loaded on an electric vehicle or an electric train can be used.

(3) In the embodiment shown in the drawing, the charge and discharge control unit 8 for a replacement module is provided integrally with the DC/DC converter 3 for charge and discharge control that is a control object thereof, but can be provided as a unit which is independent from the other portions of the electric energy storage system 1, or can be assembled in the battery unit 2 or in the battery management unit 6 inside thereof.

(4) In the embodiment shown in the drawing, it is detected that the replacement battery module 5d is connected to the maintenance connector 10, and thereby the changeover switches 40a, 40b are turned ON, OFF, but these switches may be changed over manually.

(5) In case that the number of the battery modules housed in the battery unit 2 is large, a plurality of maintenance connectors 10 can be provided in the electric energy storage system 1.

(6) While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electric energy storage system, comprising:
a battery unit and a converter to control charge and discharge of the battery unit;
wherein, the battery unit includes a plurality of battery modules and a battery management unit to manage charge and discharge of the battery modules, and each of the battery modules includes a secondary cell line composed by connecting a plurality of battery cells, and a cell monitoring unit to monitor states of the respective battery cells and to control charge and discharge thereof;
the electric energy storage system further comprising a maintenance connector for connecting a replacement battery module, and a charge and discharge control unit for a replacement module;
wherein:
in the electric energy storage system, the respective battery modules, the converter, and the maintenance connector are connected by a power line;
in the electric energy storage system, the cell monitoring units of the respective battery modules in the battery unit, the battery management unit, a cell monitoring unit of the replacement battery module connected to the maintenance connector, and the charge and discharge control unit for a replacement module are connected by a communication line; and
the charge and discharge control unit for a replacement module obtains information relating to the charge and discharge states obtained from the respective battery modules through the communication line, and controls the converter to thereby charge and discharge the replacement battery module connected to the maintenance connector.

2. The electric energy storage system according to Claim 1, wherein:
a terminal block for a main circuit and a terminal block for a communication circuit are provided in the battery unit, in the battery unit, the respective battery modules are connected at the terminal block for the main circuit by the power line, and in the battery unit, the respective battery modules are connected at the terminal block for the communication circuit by the communication line.

3. The electric energy storage system according to Claim 1, further comprising:
a first switch provided between the maintenance connector and the converter to detect that the replacement battery module is connected to the maintenance connector; and a second switch provided between the converter and the battery unit, which is turned OFF when the first switch is turned ON; wherein the first switch and the second switch are respectively connected between thereof through the power lines.

4. A method of maintaining an electric energy storage system in which:
a battery unit and a converter to control charge and discharge the battery modules are provided;
in the battery unit, a plurality of battery modules, and a battery management unit to manage charge and discharge of the battery modules are provided; and in each of the battery modules, a secondary cell line composed by connecting a plurality of battery cells, and a cell monitoring unit to monitor states of the respective battery cells and to control charge and discharge thereof are provided; and
a maintenance connector for connecting the replacement battery module and a charge and discharge control unit for a replacement module are provided;
the method of maintaining an electric energy storage system, comprising:
providing a charge and discharge control unit for a replacement module in the converter, connecting the replacement battery module to the maintenance connector, and obtaining information relating to charge and discharge states of the respective battery modules by the charge and discharge control unit for a replacement module; and
controlling the converter by the charge and discharge control unit for a replacement module, based on the information relating to the charge and discharge states obtained from the respective battery modules, to thereby charge and discharge the replacement battery module, so as to balance the charge and discharge state of the replacement battery module with the charge and discharge states of the respective battery modules in the battery unit.
